# EUROPEAN PATENT APPLICATION

(11) **EP 2 308 723 A1**
(43) Date of publication of application: **13.04.2011**
(21) Application number: 09252400.8
(22) Date of filing: 12.10.2009
(51) Int. Cl.: B60R 21/235

(54) **Airbag and method of producing**

(71) Applicant: Autoliv Development AB, 447 83 Vårgårda (SE)
(72) Inventor: Hirsch, Brita, Macclesfield, Cheshire SK11 8AH (GB)
(74) Representative: Parry, Simon James

(57) **Abstract**

An airbag suitable for use as a safety device in a motor vehicle is disclosed, the airbag having a flow aperture (11,13,14) formed through a plurality of layers (1,2,3) of flexible sheet material, the layers being fused together along the perimeter (10) of said aperture. A method of forming such an airbag is also disclosed, the method comprising the steps of: providing a plurality of layers of flexible sheet material in a substantially superimposed relation to one another; creating a flow aperture through the superimposed layers; and fusing together said layers along the perimeter of said aperture.

## Description

The present invention relates to airbags, and more particularly relates to an inflatable airbag suitable for use as a safety device in a motor vehicle or the like. The invention also relates to a method of producing such an airbag.

It is now widely known to provide airbag modules in motor vehicles as a safety measure to protect an occupant of the vehicle in the event of a crash. Typical airbag modules comprise an initially folded fabric or polymer film airbag and an inflator such as a gas generator. The gas generator is arranged to generate a large volume of gas very rapidly upon receipt of a signal from a sensor indicative of an actual or impending accident situation, so as to rapidly inflate the airbag, and thereby provide a cushion for the protection of a vehicle occupant. For example, a frontal airbag arrangement, when inflated, provides a cushion in front of a vehicle occupant to arrest forward inertial motion of the driver or passenger of the vehicle in a frontal impact collision.

Since airbags are generally stowed away in a folded state and are very rapidly deployed under considerable gas pressures, they are preferably sufficiently thin and light to take up a minimum of space and weight when stowed, but must be able to withstand high loads during deployment without rupturing. To achieve these objectives, airbags may be fabricated from relatively thin, lightweight materials so as to conserve space and weight, but may have extra layers of material added to provide localised reinforcement to specific areas of the airbag which would otherwise be vulnerable to rupture. For example, these extra reinforcing layers may be added in the vicinity of gas exit vents, gas inlet apertures, and fixation holes where the airbag is bolted to the gas generator housing.

A previously proposed airbag of the general type described above is disclosed in US005634659A, and which comprises a woven fabric panel through which a vent hole is cut. A ring of reinforcing fabric is superimposed onto the panel around the vent, and may be secured in place by stitching.

However, one limitation of such a design is that the free edges of the fabric layers, around the periphery of the vent hole or other gas flow opening, may become separated by turbulent gas flow through the aperture. The locations at which the layers are secured together may be subject to large peel forces as the layers become separated in this manner. This may be of particular concern, for example, in polymer film airbags where structural integrity may be compromised by the relatively low peel strength of adhesive bonds between layers. The use of stitched seams in polymer film airbags is also generally undesirable.

It is therefore an object of the present invention to provide an improved airbag. It is another object of the invention to provide an improved method of forming an airbag.

According to a first aspect of the invention, there is provided an airbag suitable for use as a safety device in a motor vehicle, the airbag having a flow aperture formed through a plurality of layers of flexible sheet material, wherein said layers are fused together along the perimeter of said aperture.

Advantageously, at least one of said layers of flexible sheet material forms at least part of a panel defining an inflatable chamber of said airbag, and the or at least one other of said layers is a reinforcing layer arranged to provide local reinforcement of said panel in the region of said aperture.

Conveniently, the airbag may comprise a plurality of said flow apertures.

Preferably, the airbag may comprise a plurality of flow apertures each of which are provided through a respective region of said reinforcing layer.

Advantageously, the airbag may comprise one or more openings formed through said layers, the layers also fused together along the perimeter of each said opening.

The, or at least one, said aperture may be a vent aperture.

The, or at least one, said aperture may be a gas-inlet aperture.

According to a second aspect of the invention, there is provided a method of forming an airbag suitable for use as a safety device in a motor vehicle, the method comprising: providing a plurality of layers of flexible sheet material in a substantially superimposed relation to one another; creation of a flow aperture through the superimposed layers; and fusing together of said layers along the perimeter of said aperture.

Preferably, the method comprises substantially simultaneous creation of said flow aperture and fusing together of said layers.

Advantageously, said creation of said flow aperture and said fusing together of said layers are simultaneously achieved via a single processing step.

Conveniently, said creation of said aperture and said fusing together of said layers are achieved via ultrasonic cutting and welding.

Alternatively, said creation of said aperture and said fusing together of said layers are achieved via laser cutting and welding.

The method may further comprise the step of adhesively bonding said layers to one another prior to said creation of the flow aperture.

Conveniently, at least one of said layers of flexible sheet material is a polymer film.

Preferably, at least one of said layers of flexible sheet material is a cross-ply laminate polymer film.

Alternatively, however, one or more of said layers of flexible sheet material may be composed of woven yarns.

In such an arrangement, said woven yarns may be coated or impregnated with a thermoplastic polymer.

So that the invention may be more readily understood, and so that further features thereof may be appreciated, embodiments of the invention will now be described, by way of example, with reference to the accompanying drawings in which:
Figure 1 is a schematic perspective view showing a flow aperture being formed through part of an airbag, in accordance with an embodiment of the present invention;
Figure 2 is a cross-sectional view taken through part of an airbag, showing a flow aperture formed through multiple layers of flexible sheet material;
Figure 3 is a cross-sectional view showing superimposed layers of sheet material adhesively bonded prior to forming an aperture;
Figure 4 is a cross-sectional view showing a flow aperture formed through the bonded layers of Figure 3;
Figure 5 shows the layout of an arrangement having a gas-inlet aperture with mounting holes, a vent aperture, and reinforcing layers in the region of both apertures; and
Figure 6 is a schematic perspective view similar to that of Figure 1, showing an aperture being formed through part of an airbag in accordance with another embodiment of the invention.

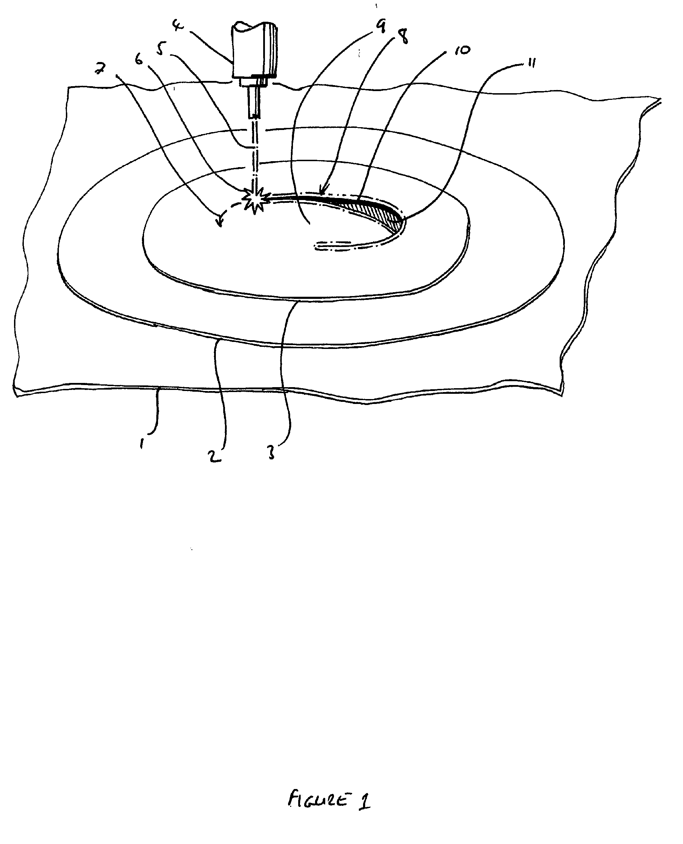

Referring now in more detail to figure 1, there is illustrated a method of producing an airbag in accordance with an embodiment of the present invention. Part of a panel 1 of the airbag is shown, the panel defining the internal inflatable volume of the airbag. A first reinforcing panel 2 is superimposed onto the panel 1 over a region of the panel through which a flow aperture such as a gas-inlet or vent aperture is to be formed. A second reinforcing panel 3 is then superimposed onto the first reinforcing panel 2. The three superimposed panels 1,2,3 are each provided in the form of initially separate layers of a suitable flexible sheet material. In the preferred embodiments of the invention, the flexible sheet material is a thin polymer film. However, it is to be appreciated that in alternative arrangements, the flexible sheet material can be a woven fabric.

Once the panels 1,2,3 are superimposed as illustrated in figure 1, a laser 4 is then used to cut the flow-aperture through the material of the superimposed panels. As illustrated in figure 1, the laser 4 is directed towards the panels and energised so as to emit a laser beam 5 which is incident upon the second reinforcing panel 2. The laser tool 4 is configured so as to produce a laser beam 5 having sufficient energy to cut through all of the superimposed panels 1,2,3 beneath its point of incidence 6, thermally inducing the localised melting of the polymeric material of the panels in a heat-affected zone surrounding the cut. The laser tool 4 is moved relative to the superimposed panels, so that the point of incidence 6 of the beam follows a circular path 7, thereby creating a circular cut through the superimposed panels 1,2,3. As the laser beam 5 travels along this circular path 7, it leaves in its wake a molten heat-affected zone which solidifies as the polymeric material of the panels cools, thereby forming a region 8 where the edges of the panels are fused together in the immediate vicinity of the cut.

Once the laser beam 5 has travelled fully along the closed circular path 7, the cut encloses a central circle of scrap material 9, which is thus separated from the surrounding material of the superimposed panels 1,2,3. The exposed edges of the superimposed panels 1,2,3 are now fused together in the region 8 along the perimeter 10 of a circular flow-aperture 11 formed through the superimposed panels 1,2,3.

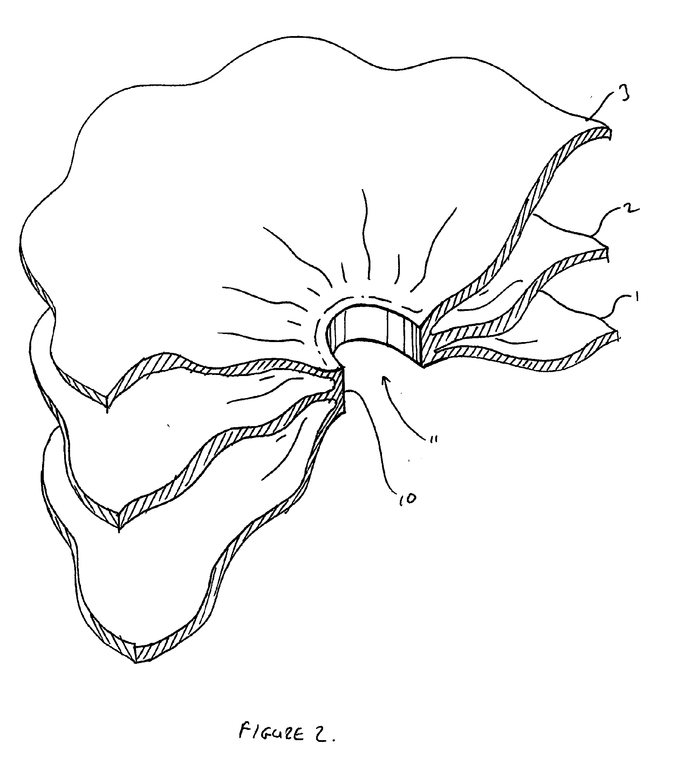

Figure 2 shows the resulting flow aperture 11 in further detail. In particular, figure 2 clearly shows how the superimposed panels 1,2,3 have been fused together at the periphery 10 of the aperture 11.

A flow aperture produced using this method offers advantages over flow apertures without fused edges, including improved structural integrity due to the absence of peel forces induced by layer separation during turbulent gas flow through the aperture. Furthermore, employment of such a production method may simplify the airbag construction process as gas flow apertures and other openings may be cut through superimposed layers and these layers joined together simultaneously or via a single processing step.

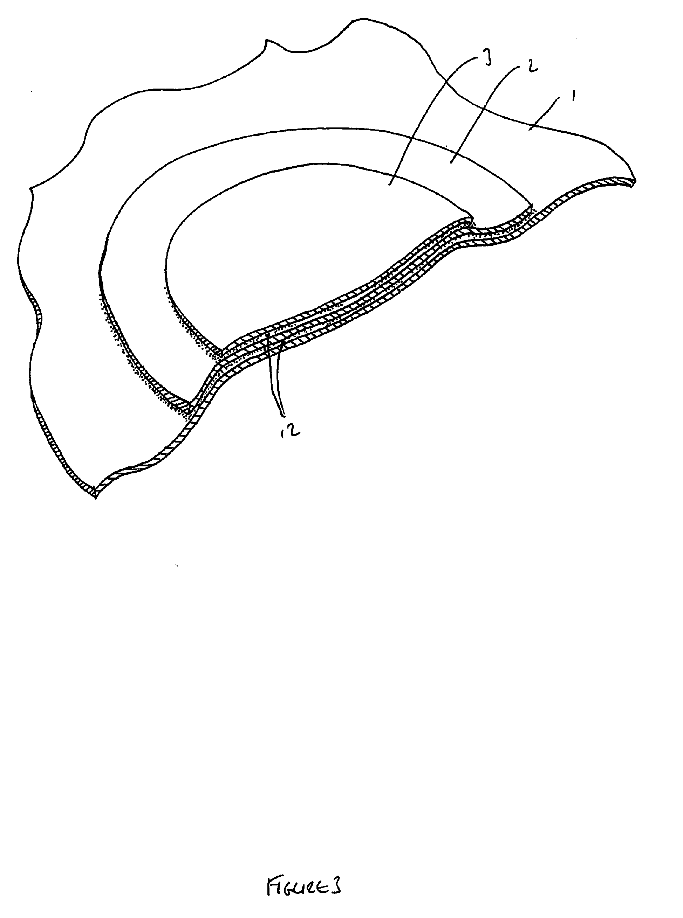

In alternative embodiments, it is envisaged that the airbag fabrication method may include the step of adhesively bonding superimposed layers of flexible material together, prior to the step of forming of an aperture through these layers in the manner proposed above. By way of example, Figure 3 shows an arrangement in which the main airbag panel 1 and the reinforcing panels 2, 3 are bonded together with layers of adhesive 12 prior to the formation of the flow-aperture. The adhesion step may be followed by hot and/or cold pressing in order to at least partially cure the adhesive. An aperture is then created and the superimposed panels 1,2,3 fused together along the periphery of the aperture, according to the method shown in Figure 1.

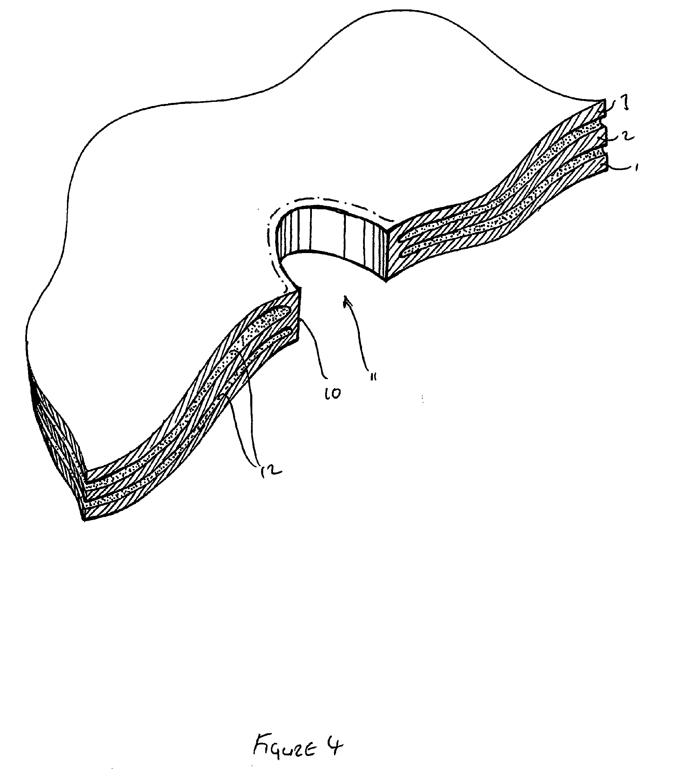

A section through a flow-aperture 11, formed through adhesively bonded panels 1,2,3, is shown in Figure 4. The adhesive 12 employed in such a process step may be of a type suitable to provide permanent structural integrity to the bonded layers; or it may be intended only to temporarily hold the component layers in place during the assembly, cutting and fusing steps. The adhesive 12 may cover substantially all of the opposed surfaces of the superimposed panels as illustrated, or may be applied to only a part thereof such as to form a ring encircling the region through which the flow aperture 11 is to be formed. Alternatively, other methods of joining superimposed layers together may be employed before or after the steps of forming and fusing any apertures. Such methods could include stitching, or welding by laser or by ultrasonic methods.

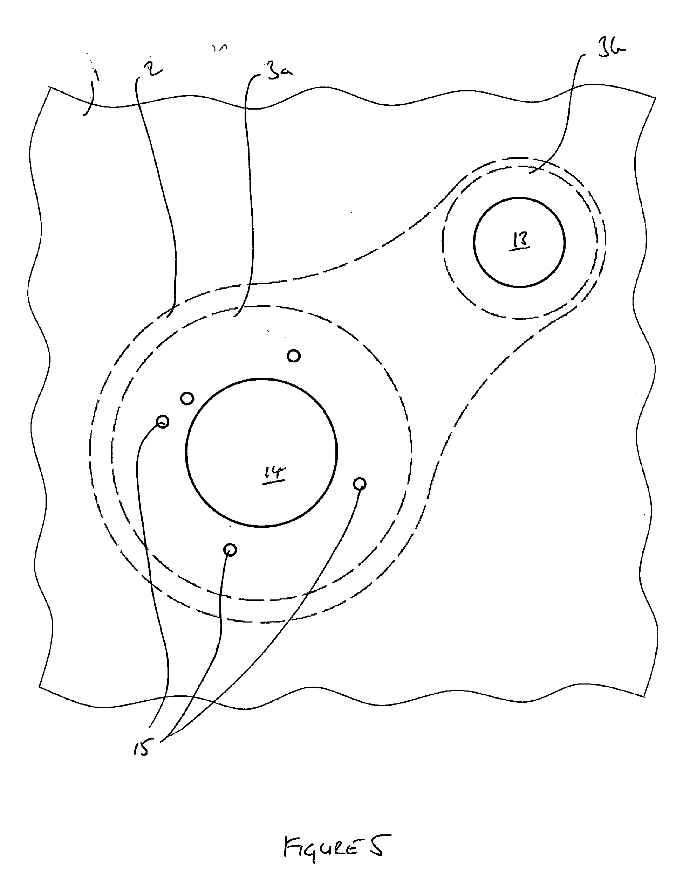

Turning now to consider Figure 5, there is illustrated a reinforced region of an airbag panel 1 through which are formed two discrete flow-apertures, namely a vent-aperture 13 and a gas-inlet aperture 14. A first, generally "keyhole-shaped" reinforcing panel 2 is superimposed on the airbag panel 1, and a pair of second circular reinforcing panels 3a, 3b are superimposed on the keyhole shaped panel. As in the case of the previously described embodiments, the four panels 1,2,3a,3b may take the form of separate layers of thin polymer films. However, in preferred arrangements, the panels may be formed of cross-ply laminate polymer film, in which case it is preferable to arrange the panels such that the fibre direction of any given panel is oriented at an angle of 30 to 60 degrees relative to the or each adjacent panel. The superimposed panels 1, 2, 3a, 3b may be bonded to one another in the layout indicated in Figure 5 via the application of intervening layers of adhesive, followed by a hot and/or cold pressing operation, in a manner generally similar to that proposed above.

In a similar manner to that described above with reference to Figure 1, a laser 4 is then used to cut the two flow apertures 13, 14. However, the laser 4 can also be used to cut a series of additional openings 15 through the superimposed panels in the same manner. For example, the arrangement illustrated in figure 5 comprises an irregularly-spaced array of such openings in the form of mounting holes distributed around the outside of the gas-inlet aperture 14. As will be appreciated by those of skill in the art, the mounting holes 15 facilitate connection of the airbag to the housing of a gas generator provided to inject a flow of inflating gas into the airbag through the gas-inlet aperture 14.

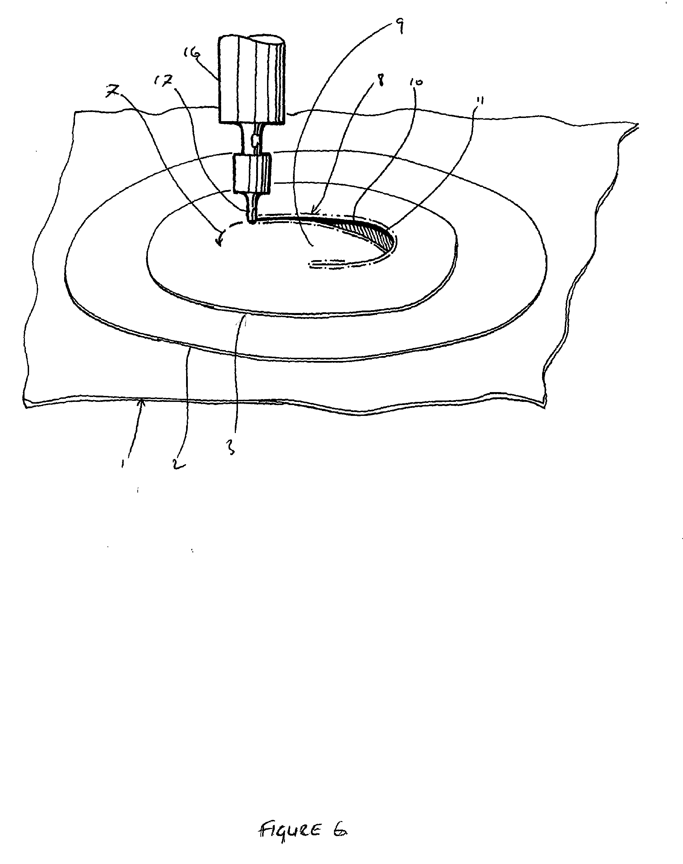

Whilst the invention has been described above with specific reference to the use of a laser to simultaneously cut and fuse the material of the superimposed panels, it is to be appreciated that in variants of the invention other cutting and fusing techniques could be used. For example Figure 6 schematically illustrates the use of, an ultrasonic cutting tool 16 to cut and fuse the material of the panels.. Similar to the arrangement of Figure 1, a first reinforcing panel 2 is superimposed onto a larger airbag panel 1, and a second reinforcing panel 3 is superimposed onto the first reinforcing panel 2. The blade 17 of an ultrasonic cutting tool 16 is then applied to the material of the superimposed panels to create an incision through the panels, the ultrasonic oscillation of the blade providing sufficient thermal excitation to induce the localised melting of the superimposed panels in a heat-affected zone surrounding this incision. The blade 17 is moved a circular path 7, producing a circular cut through the superimposed. The blade thus leaves in its wake a molten heat-affected zone which solidifies to form a region 8 where the edges of the superimposed panels are fused together in the immediate vicinity of the cut. The circular cut encloses a central circle of material 9, separating it from the surrounding material of the superimposed layers to define the flow-aperture 8 .

As indicated above, it is envisaged that in preferred embodiments of the invention, the flexible sheet material from which the superimposed layers are formed will be a polymer film, and may preferably be a cross-ply laminate film. However, it is to be appreciated that in alternative embodiments , the flexible sheet material may take alternative forms, such as, for example: fabric woven from yarns of suitable polymeric materials, or polymer-coated fabrics. In the case that the aperture is cut and/or fused using thermal means, the sheet material should have thermoplastic properties. Suitable materials would include, for example: thermoplastic polymer films; cross-ply laminate films having at least a thermoplastic matrix or coating; woven fabrics composed of yarns containing thermoplastic fibres or composed of yarns that are impregnated or coated with a thermoplastic polymer.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

When used in this specification and claims, the terms "comprises" and "comprising" and variations thereof mean that the specified features, steps or intrudes are included. The terms are not to be interpreted to exclude the presence of other features, steps or components.

The features disclosed in the forgoing description, or the filing claims, or the accompanying drawings, expressed in their specific forms or in terms of a means of performing a disclosed function, or a method or process for attaining the disclosed results, as appropriate, may, separately, or in any combination of such features, be utilised for realising the invention in diverse forms thereof.

## Claims

1. An airbag suitable for use as a safety device in a motor vehicle, the airbag having a flow aperture (11) formed through a plurality of layers (1,2,3) of flexible sheet material, wherein said layers are fused together along the perimeter (10) of said aperture.

2. An airbag according to claim 1, wherein at least one of said layers of flexible sheet material (1) forms at least part of a panel defining an inflatable chamber of said airbag, and wherein the or at least one other of said layers is a reinforcing layer (2,3) arranged to provide local reinforcement of said panel in the region of said aperture (11).

3. An airbag according claim 1 or 2, comprising a plurality of said flow apertures (13,14).

4. An airbag according to claim 2, comprising a plurality of flow apertures (13,14) each of which are provided through a respective region of a said reinforcing layer (2).

5. An airbag according to any preceding claim, comprising one or more openings (15) formed through said layers, wherein said layers are also fused together along the perimeter of each said opening.

6. An airbag according to any preceding claim wherein the or at least one said aperture is a vent aperture (11,13).

7. An airbag according to any one of claims 1 to 5 wherein the or at least one said aperture is a gas inlet aperture (14).

8. A method of forming an airbag suitable for use as a safety device in a motor vehicle, the method comprising: providing a plurality of layers of flexible sheet material (1,2,3) in a substantially superimposed relation to one another; creation of a flow aperture (11) through the superimposed layers; and fusing together of said layers along the perimeter (10) of said aperture.

9. A method according to claim 8, comprising substantially simultaneous creation of said flow aperture (11) and fusing together of said layers (1,2,3).

10. A method according to claim 8 or 9, wherein said creation of said flow aperture (11) and said fusing together of said layers (1,2,3) are achieved simultaneously via a single processing step.

11. A method according to any one of claims 8 to 10, wherein said creation of said aperture (11) and said fusing together of said layers (1,2,3) are achieved via ultrasonic cutting and welding (17).

12. A method according to any one of claims 8 to 10, wherein said creation of said aperture (11) and said fusing together of said layers (1,2,3) are achieved via laser cutting and welding (5).

13. A method according to any one of claims 8 to 12, further comprising the step of adhesively bonding said layers (1,2,3) to one another prior to said creation of the flow aperture (11).

14. An airbag according to any one of claims 1 to 7, or a method according to any one of claims 8 to 13, wherein at least one of said layers of flexible sheet material (1,2,3) is a polymer film.

15. An airbag according to any one of claims 1 to 7, or a method according to any one of claims 8 to 13, wherein at least one of said layers of flexible sheet material (1,2,3) is a cross-ply laminate polymer film.
